**Europäisches Patentamt**

**European Patent Office**

**Office européen des brevets**

(11) Veröffentlichungsnummer: **0 161 377**
A2

# (12) EUROPÄISCHE PATENTANMELDUNG

(21) Anmeldenummer: **84810602.7**

(22) Anmeldetag: **10.12.84**

(51) Int. Cl.⁴: **B 29 C 65/02**

(30) Priorität: **18.04.84  CH 1954/84**

(43) Veröffentlichungstag der Anmeldung: **21.11.85**
**Patentblatt 85/47**

(84) Benannte Vertragsstaaten: **AT BE CH DE FR GB IT LI LU NL SE**

(71) Anmelder: **HUBER & SUHNER AG KABEL-, KAUTSCHUK-, KUNSTSTOFF-WERKE, Degersheimer Strasse 14, CH-9100 Herisau (CH)**

(72) Erfinder: **Müller, Hans, Saumstrasse 10, CH-9100 Herisau (CH)**
Erfinder: **Wiss, Martin, Wiggenrainstrasse 30, CH-9400 Rorschacherberg (CH)**

(74) Vertreter: **White, William et al, PATENTANWALTS-BUREAU ISLER AG Postfach 6940 Walchestrasse 23, CH-8023 Zürich (CH)**

(54) Verfahren zum endweisen Verbinden zweier länglicher Kunststoffkörper.

(57) Zum endweisen Verbinden zweier länglicher Kunststoffkörper, beispielsweise von zwei Rohren, wird eine Muffe aus ähnlichem Material über die Verbindungsstelle geschoben. Mit einem Vernetzungsmittel, das mittels der Muffe an diese Stelle gebracht wird, können die beiden Rohre durch eine chemische Verschweissung miteinander verbunden werden. Eine solche Verbindung zeigt praktisch dieselbe Festigkeit bezüglich Druck und Wärme wie das Material selbst.

EP 0 161 377 A2

0161377

- 1 -

Huber & Suhner AG
Kabel-, Kautschuk-, Kunststoff-Werke

---

Verfahren zum endweisen Verbinden
zweier länglicher Kunststoffkörper

---

Die vorliegende Erfindung betrifft ein Verfahren zum endweisen Verbinden zweier länglicher Kunststoffkörper gemäss dem
Oberbegriff des unabhängigen Patentanspruchs 1.

In der europäischen Patentanmeldung Nr. 102 919 ist ein Verfahren zum Verbinden von Rohren beschrieben. Es wird vorgeschlagen, eine Muffe aus vernetztem Kunststoff mit wenigstens
angenähert gleicher lichter Weite und ebensolchem Aussendurchmesser, wie das allenfalls kleinere Rohr der beiden zu
verbindenden Rohre auf eine lichte Weite auszuweiten, die
grösser ist als der Aussendurchmesser des allenfalls grösseren Rohres. Nach dem Zusammensetzen der Rohre innerhalb der
Länge der Muffe wird diese erneut bis über die Kristallschmelztemperatur erwärmt und nach dem Schrumpfen auf die kleinst mögliche Dimension auf Umgebungstemperatur abgekühlt. Unter anderem wird vorgeschlagen, zwischen die Muffe und die beiden Rohrenden ein organisches Peroxid hineinzubringen.

In der Praxis hat es sich gezeigt, dass der Fall eintreten kann, dass beim Erwärmen der Muffe über die Kirstallschmelztemperatur das Vernetzungsmittel, z.B. Peroxid, teilweise schon reagiert, bevor der enge Kontakt zwischen Muffe und den zu verbindenden Rohre hergestellt ist, um sie miteinander zu verbinden. Daher ist dann nur ein Teil der zusätzlichen Vernetzung für die Verbindung wirksam. Eine solche Verbindung genügt allerdings auch, wenn keine hohen Drücke oder Temperaturen auf diese Stelle einwirken. Den in gewissen Fällen aus Sicherheitsgründen verlangten Prüfdrücken und Temperaturen können solche Verbindungen nicht genügen.

Es ist eine Aufgabe der Erfindung, diese Technik des Verbindens zweier Kunststoffrohre derart zu verbessern, dass in jedem Fall eine Verbindungsstelle erhalten wird, die den an die Rohre selbst gestellten Anforderungen wenigstens in bezug auf Drücke und Wärme genügen.

Erfindungsgemäss wird dies durch die Merkmale im kennzeichnenden Teil des unabhängigen Patentanspruches 1 erreicht.

Die beiden zu verbindenden Teile können aus einem teilweise vernetzten Thermoplast bestehen, der durch das Vernetzungsmittel weiter vernetzen kann.

Auch könnte die Muffe aus einem wenigstens teilweise vernetzten Thermoplast bestehen.

In einer Abwandlung könnte die Muffe auch aus einem unvernetzten Thermoplast bestehen, wenn die beiden Rohre je aus einem vernetzten Thermoplast bestehen.

Als Vernetzungsmittel kann ein Peroxid oder eine organische Silanverbindung verwendet werden.

Um die Pressung des Vernetzungsgebietes zwischen der Muffe und den Kunststoffkörpern zu verbessern, könnte eine Schrumpfmuffe bzw. ein Schrumpfschlauch über die erste Muffe geschoben werden. Als Schrumpfschlauch wird ein Schlauch aus Thermoplast bezeichnet, der nach dem Vernetzen über die Kristallschmelztemperatur erwärmt und expandiert wurde, so dass er nach erneuter Erwärmung über die Kristallschmelztemperatur bestrebt ist, auf seinen ursprünglichen Durchmesser zurückzuschrumpfen.

Um zu verhindern, dass sich die lichten Weiten bei Rohren als die genannten Kunststoffkörper an der Verbindungsstelle verkleinern, kann eine Tülle aus einem Metall eingesetzt werden.

Anstelle von nur einer Tülle können deren zwei verwendet werden, die je mit einem Bördelrand versehen sind, derart, dass der Bördelrand ein Verschieben der Tüllen gegen das Innere des Rohres zu verhindert.

Für die Erwärmung der Verbindungsstelle kann Wärmestrahlung, strömendes Wärmeträgermedium oder ein elektromagnetisches Wechselfeld benützt werden. Zur Vergrösserung der Wirkung kann das Material von Schrumpfschlauch und/oder Muffe wenigstens teilweise polar sein.

Es ist denkbar, dass das Vernetzungsmittel in die Muffe allein, in die Körper allein oder sowohl in die Muffe als auch in die Körper eingearbeitet oder eindiffundiert ist.

Beispielsweise kann eine das Vernetzungsmittel enthaltende Muffe aus einem Rohrstück bestehen, das satt auf die zu verbindenden Rohrenden passt. Zum Verbinden von zwei Rohren wird dann eine solche Muffe über die beiden stumpf aneinandergestossenen Rohre geschoben und darüber eine weitere Muffe plaziert, die zuvor vernetzt und oberhalb der Kristallschmelztemperatur expandiert wurde. Durch Erwärmung dieser Schrumpfmuffe schrumpft sie und presst die innere, das Vernetzungsmittel enthaltende Muffe fest auf die zu verbindenden Rohre.

Solange die Schrumpfmuffe noch nicht eng an der inneren Muffe anliegt, wird diese innere Muffe nur wenig erwärmt, so dass das darin enthaltene Vernetzungsmittel noch nicht reagieren kann. Erst wenn sich die äussere Muffe eng an die innere Muffe anschmiegt, und diese dadurch gegen die zu verbindenden Körper presst, genügt die Wärmeübertragung, um das Vernetzungsmittel der inneren Muffe auf die benötigte Reaktionstemperatur zu erwärmen.

Versuche haben gezeigt, dass eine derart hergestellte Verbindung in ihrer Festigkeit der Materialfestigkeit entspricht und sogar eine höhere mechanische und thermische Festigkeit als das Kunststoffmaterial der Körper haben kann.

Durch ein solches Verfahren zum endweisen Verbinden zweier Kunststoffkörper können beispielsweise Kunststoffrohre für eine Bodenheizung verlegt und leicht und einfach auf der Baustelle an Ort untereinander verbunden werden. Es erübrigen sich damit komplizierte Verfahren zum Entspannen extrudierter Rohre oder das Verlegen von bogenbildenden Tellern und Anklammern der Rohre, wie es heute vielfach üblich ist.

P a t e n t a n s p r ü c h e

1.          Verfahren zum endweisen Verbinden zweier länglicher Kunststoffkörper, dadurch gekennzeichnet, dass eine Muffe mit wenigstens angenähert gleicher lichter Weite wie der
allenfalls dickere Kunststoffkörper über die beiden zu verbindenden Enden geschoben wird, welche Muffe aus einem ähnlichen Material besteht, wie die Kunststoffkörper, wobei ein
Vernetzungsmittel zugesetzt ist, und dass dann die Muffe erwärmt wird, um durch gemeinsame Vernetzung von Muffe und
Kunststoffkörpern mittels der Makromoleküle durch ein sogenanntes chemisches Verschweissen ein übergreifendes Netzwerk
zu bilden.

2.          Verfahren nach Patentanspruch 1, dadurch gekennzeichnet, dass die beiden Kunststoffkörper aus einem teilweise
vernetzten Thermoplast  bestehen, derart, dass dieser mit dem Vernetzungsmittel in der Muffe zusammen weiter vernetzt wird.

3.      Verfahren nach Patentanspruch 1 oder 2, dadurch gekennzeichnet, dass die Muffe aus einem wenigstens teilweise vernetzten Thermoplast besteht.

4.      Verfahren nach Patentanspruch 1 oder 2, dadurch gekennzeichnet, dass die Muffe aus einem unvernetzten Thermoplast besteht.

5.      Verfahren nach einem der Patentansprüche 1 bis 4, dadurch gekennzeichnet, dass das Vernetzungsmittel ein Peroxid ist.

6.      Verfahren nach einem der Patentansprüche 1 bis 4, dadurch gekennzeichnet, dass das Vernetzungsmittel eine organische Silanverbindung ist.

7.      Verfahren nach einem der Patentansprüche 1 bis 6, dadurch gekennzeichnet, dass über die beiden in der Muffe zusammengestossenen Kunststoffkörper ein Schrumpfschlauch aus vernetztem Thermoplast gelegt wird, der von einem höchstens gleich grossen Innendurchmesser wie der Aussendurchmesser des allenfalls dünneren Kunststoffkörpers nach Erwärmung über die Kristallschmelztemperatur expandiert wurde, dass dann der über der Verbindungsstelle befindliche Schrumpfschlauch erneut über die Kristallschmelztemperatur erwärmt wird, um ihn auf sein ursprüngliches Mass zurückzuschrumpfen, und dass die Wärme des geschrumpften Schrumpfschlauches für die chemische Verschweissung der Muffe mit den beiden Kunststoffkörpern benützt wird.

8.      Verfahren nach Patentanspruch 7, dadurch gekennzeichnet, dass vor dem Verbinden von rohrartigen vernetzten Kunststoffkörpern eine Tülle in die Hohlräume der beiden Kunststoffkörper geschoben wird.

9.      Verfahren nach Patentanspruch 7, dadurch gekennzeichnet, dass vor dem Verbinden von rohrartigen vernetzten Kunststoffkörpern in den Hohlraum jedes Kunststoffkörpers eine Tülle aus Metall geschoben wird.

10.     Verfahren nach Patentanspruch 9, dadurch gekennzeichnet, dass die Tülle mit einem Bördelrand versehen ist, um ein Gleiten in das Innere des Hohlraumes zu verhindern.

11. Verfahren nach einem der Patentansprüche 1 bis 10, dadurch gekennzeichnet, dass zum Erwärmen der Teile Wärme in Form von Wärmestrahlung oder von einem elektromagnetischen Wechselfeld benützt wird.

12. Verfahren nach einem der Patentansprüche 1 bis 11, dadurch gekennzeichnet, dass das Vernetzungsmittel in das Material der Muffe hineingearbeitet ist.

13. Verfahren nach einem der Patentansprüche 1 bis 11, dadurch gekennzeichnet, dass das Vernetzungsmittel in die Muffe eindiffundiert ist.

14. Verfahren nach einem der Patentansprüche 1 bis 11, dadurch gekennzeichnet, dass Vernetzungsmittel in das Material des Kunststoffkörpers eingearbeitet ist.

15. Verfahren nach einem der Patentansprüche 1 bis 11, dadurch gekennzeichnet, dass Vernetzungsmittel in die Kunststoffkörper eindiffundiert ist.

16. Verfahren nach einem der Patentansprüche 1 bis 11, dadurch gekennzeichnet, dass Vernetzungsmittel sowohl in der Muffe als auch in wenigstens einem Kunststoffkörper vorhanden ist.